(19) Europäisches Patentamt
European Patent Office
Office européen des brevets

(11) **EP 3 901 224 A1**

(12) **EUROPEAN PATENT APPLICATION**
published in accordance with Art. 153(4) EPC

(43) Date of publication:
**27.10.2021 Bulletin 2021/43**

(51) Int Cl.:
***C09D 11/037*** (2014.01)

(21) Application number: **19900821.0**

(22) Date of filing: **03.12.2019**

(86) International application number:
**PCT/JP2019/047160**

(87) International publication number:
**WO 2020/129608 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2018 JP 2018236531**
**18.12.2018 JP 2018236526**

(71) Applicant: **Kao Corporation**
**Chuo-ku,**
**Tokyo 103-8210 (JP)**

(72) Inventors:
• **MIZUSHIMA, Ryuma**
**Wakayama-shi, Wakayama 640-8580 (JP)**
• **OZAKI, Yuki**
**Wakayama-shi, Wakayama 640-8580 (JP)**
• **MATSUZONO, Takuto**
**Wakayama-shi, Wakayama 640-8580 (JP)**
• **UEDA, Yasufumi**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **WATER-BASED GRAVURE INK**

(57)    The present invention relates to an aqueous gravure ink containing pigment particles A, polymer particles B and water, the aqueous gravure ink being capable of satisfying at least one of the following requirements 1 and 2: Requirement 1: an average particle size of whole particles in the aqueous gravure ink is not less than 150 nm and not more than 500 nm, and a polydispersity index in a particle size distribution of the whole particles is not less than 0.10 and not more than 0.30; and Requirement 2: an average particle size of the pigment particles A is not less than 140 nm and not more than 550 nm, and a polydispersity index in a particle size distribution of the pigment particles A is not less than 0.08 and not more than 0.32, and an average particle size of the polymer particles B is not less than 30 nm and not more than 220 nm, and a polydispersity index in a particle size distribution of the polymer particles B is not less than 0.08 and not more than 0.32. The aqueous gravure ink of the present invention is excellent in storage stability and is capable of providing a printed material that is excellent in rub fastness and adhesion properties.

**Description**

FIELD OF THE INVENTION

The present invention relates to an aqueous gravure ink.

BACKGROUND OF THE INVENTION

Gravure printing is a printing method in which an ink is transferred to a printing medium using a gravure printing plate on which cells for receiving the ink are formed. The gravure printing is capable of well controlling a printing quality of the obtained printed material by suitably adjusting a depth of the respective cells and a distance between the cells (screen ruling: the number of screen lines) and also capable of conducting high-definition printing, and therefore has been utilized in extensive applications.

As a gravure ink used in the gravure printing, a non-toluene oil-based ink has been conventionally employed for the purpose of improving working environments. However, the non-toluene ink has still failed to achieve reduction of an amount of volatile organic compounds used therein and reduction of emission of $CO_2$, and therefore has posed problems not only from the standpoint of labor environments and global environments, but also from the standpoint of disaster prevention and further a residual solvent in the case where the ink is used in food-related applications. In addition, since a large amount of the oil-based ink has been used in the gravure printing, there tends to occur such a problem that the gravure printing is hardly capable of meeting needs of market for production of a wide variety and small lot of printed materials.

For this reason, the gravure printing method using an aqueous ink has been noticed. In order to improve coating film properties of the ink such as rub fastness (abrasion resistance) of the resulting printed material, etc., and also improve coating film properties of the ink such as adhesion properties of the ink to a printing medium, etc., there is known such a technology that a resin emulsion is compounded in the aqueous ink.

For example, JP 10-204361A (Patent Literature 1) discloses an aqueous printing ink using a resin emulsion as a vehicle which has such a particle size distribution that amounts of particles having a particle size of less than 50 nm and particles having a particle size of 50 to 600 nm in a number-based particle size distribution thereof are less than 20% by weight and not less than 60% by weight, respectively, on the basis of whole particles contained therein, as an ink suitable for gravure printing which is excellent in stability, printability and coating film properties. In Examples of the Patent Literature 1, it is described that after conducting printing on a polyvinyl chloride-based wall paper raw fabric coated with an expandable polyvinyl chloride sol using an ink prepared by diluting the aqueous printing ink with water such that a #3 Zahn Cup viscosity of the ink was 25 seconds, the resulting printed material was subjected to heat-foaming process in a hot-air oven at 220°C for 45 seconds, and then evaluated for coating film properties (including adhesion properties, water resistance, abrasion resistance and chemical resistance) thereof after the heat-foaming process.

JP 2017-128701A (Patent Literature 2) discloses an aqueous gravure printing ink composition for carton boxes which contains a colorant, an alkali-soluble-type water-soluble resin, an emulsion-type aqueous resin, a wax and an aqueous medium in which the wax contains large-size wax particles having a particle size of 2 to 10 $\mu$m and small-size wax particles having a particle size of not more than 1.0 $\mu$m, as an ink composition that is excellent in not only temporal stability, but also drying properties, contamination resistance, abrasion resistance, etc., even when the resulting printed material for carton boxes are uncoated with an overprint varnish composition.

SUMMARY OF THE INVENTION

The present invention relates to an aqueous gravure ink containing pigment particles A, polymer particles B and water, the aqueous gravure ink being capable of satisfying at least one of the following requirements 1 and 2:

Requirement 1: an average particle size of whole particles in the aqueous gravure ink is not less than 150 nm and not more than 500 nm, and a polydispersity index in a particle size distribution of the whole particles is not less than 0.10 and not more than 0.30; and

Requirement 2: an average particle size of the pigment particles A is not less than 140 nm and not more than 550 nm, and a polydispersity index in a particle size distribution of the pigment particles A is not less than 0.08 and not more than 0.32, and

an average particle size of the polymer particles B is not less than 30 nm and not more than 220 nm, and a polydispersity index in a particle size distribution of the polymer particles B is not less than 0.08 and not more than 0.32.

DETAILED DESCRIPTION OF THE INVENTION

In recent years, a resin film has now been increasingly used as a printing medium. However, if any flaws or delamination are present on characters or images printed on the printing medium, the resulting printed material tends to be deteriorated in their commercial value. Therefore, it has been required that the printed characters or images exhibit high rub fastness and high adhesion properties against a low-liquid absorbing or non-liquid absorbing printing medium such as the resin film, etc., upon printing.

However, in the Patent Literature 1, it is merely described that the aqueous ink is excellent in coating film properties after subjecting the resulting printed material to heat-foaming process at 220°C. Thus, in the Patent Literature 1, the ink is used under the temperature conditions in which the polymer particles contained therein are softened or melted. Therefore, the aqueous ink described in the Patent Literature 1 tends to be insufficient in rub fastness or adhesion properties against a low-liquid absorbing or non-liquid absorbing printing medium such as a PET film or a polypropylene film, etc., which should be subjected to heat treatments in a limited temperature range.

In addition, although an oil-based gravure ink or an aqueous gravure ink having a large alcohol content assures good antiseptic properties owing to an oil-based solvent or an alcohol contained therein, the aqueous gravure ink having a large water content tends to be deteriorated in antiseptic properties and rust preventive properties. If fungi, etc., are propagated in the ink, adverse influence tends to be exerted onto storage stability of the ink. To solve this problem, it is considered that good antiseptic properties of the aqueous gravure ink having a large water content are assured by compounding an antiseptic compound into the ink. In the Patent Literature 1, although as the components that may be compounded in the ink, there are enumerated antiseptic agents, mildew-proof agents and anti-fungus agents, neither kinds nor compounding effects of these agents are specifically described therein. Also, in the Patent Literature 2, there are no descriptions concerning the antiseptic agents.

The present invention relates to an aqueous gravure ink that is excellent in storage stability, and is capable of providing a printed material that is excellent in rub fastness.

In addition, the present invention also relates to an aqueous gravure ink that is excellent in adhesion properties and storage stability, and is capable of providing a printed material having high printing quality.

The present inventors have found that the aforementioned conventional problems can be solved by an aqueous gravure ink containing pigment particles A and polymer particles B in which an average particle size and a polydispersity index of whole particles including the pigment particles A and the polymer particles B are controlled to specific ranges, or respective average particle sizes and polydispersity indices of the pigment particles A and the polymer particles B are controlled to specific ranges.

That is, the present invention relates to an aqueous gravure ink containing pigment particles A, polymer particles B and water, the aqueous gravure ink being capable of satisfying at least one of the following requirements 1 and 2:

Requirement 1: an average particle size of whole particles in the aqueous gravure ink is not less than 150 nm and not more than 500 nm, and a polydispersity index in a particle size distribution of the whole particles is not less than 0.10 and not more than 0.30; and
Requirement 2: an average particle size of the pigment particles A is not less than 140 nm and not more than 550 nm, and a polydispersity index in a particle size distribution of the pigment particles A is not less than 0.08 and not more than 0.32, and
an average particle size of the polymer particles B is not less than 30 nm and not more than 220 nm, and a polydispersity index in a particle size distribution of the polymer particles B is not less than 0.08 and not more than 0.32.

In accordance with the present invention, it is possible to provide an aqueous gravure ink that is excellent in storage stability, and is capable of providing a printed material that is excellent in rub fastness.

In addition, in accordance with the present invention, it is possible to provide an aqueous gravure ink that is excellent in adhesion properties and storage stability, and is capable of providing a high-quality printed material.

[Aqueous Gravure Ink]

The aqueous gravure ink of the present invention contains pigment particles A, polymer particles B and water, the aqueous gravure ink being capable of satisfying at least one of the following requirements 1 and 2:

Requirement 1: an average particle size of whole particles in the aqueous gravure ink is not less than 150 nm and not more than 500 nm, and a polydispersity index in a particle size distribution of the whole particles is not less than 0.10 and not more than 0.30; and
Requirement 2: an average particle size of the pigment particles A is not less than 140 nm and not more than 550 nm, and a polydispersity index in a particle size distribution of the pigment particles A is not less than 0.08 and not more than 0.32, and

an average particle size of the polymer particles B is not less than 30 nm and not more than 220 nm, and a polydispersity index in a particle size distribution of the polymer particles B is not less than 0.08 and not more than 0.32.

In the following, the aqueous gravure ink capable of satisfying the requirement 1 of the present invention is also referred to merely as an "aqueous gravure ink 1" or an "ink 1 of the present invention", whereas the aqueous gravure ink capable of satisfying the requirement 2 of the present invention is also referred to merely as an "aqueous gravure ink 2" or an "ink 2 of the present invention".

The aqueous gravure ink 1 of the present invention is excellent in storage stability, and is capable of providing a printed material that is excellent in rub fastness and has high printing quality. The reason why the aforementioned advantageous effects can be attained by the present invention is considered as follows, though it is not clearly determined yet.

That is, the ink 1 of the present invention is kept in such a state that the polydispersity index in a particle size distribution of the whole particles including the pigment particles A and the polymer particles B is small. When the polydispersity index of the whole particles is small, the particle size distribution thereof becomes narrow. Therefore, the respective particle sizes of the pigment particles A and the polymer particles B become uniform, so that a more uniform coating film of the polymer is formed on a surface of the printing medium to enhance strength of the coating film. As a result, it is considered that the resulting printed material can be improved in rub fastness.

Moreover, since the average particle size of the whole particles including the pigment particles A and the polymer particles B has a narrow distribution and therefore the particle sizes thereof become uniform, it is considered that electric charge repulsion between the pigment particles A, between the polymer particles B and between the pigment particles A and the polymer particles B becomes equalized, so that the resulting ink can be improved in storage stability.

In addition, in the case where the ink further contains an antiseptic compound, it is considered that since the antiseptic compound is unadsorbed onto the pigment particles A or the polymer particles B owing to adequate ionicity or hydrophobicity thereof, the pigment particles A and the polymer particles B can be maintained in a stable state, and it is also possible to suppress propagation of fungi in the ink, so that the ink can be prevented from suffering from flocculation thereof and therefore improved in stability in the course of formation of a printed surface. For this reason, it is considered that since the pigment particles A and the polymer particles B are allowed to spread uniformly over the surface of the printing medium, a uniform coating film of the ink can be formed on the surface of the printing medium, and the resulting printed material can be improved in rub fastness.

As a result, it is considered that the ink is excellent in storage stability, and it is possible to obtain a printed material that is excellent in rub fastness.

The aqueous gravure ink 2 of the present invention is excellent in adhesion properties and storage stability, and is capable of providing a high-quality printed material. The reason why the aforementioned advantageous effects can be attained by the present invention is considered as follows, though it is not clearly determined yet.

That is, the ink 2 of the present invention contains the pigment particles A and the polymer particles B which each have a specific average particle size and a small polydispersity index.

When the polydispersity index of the pigment particles A is small, the particle size distribution of the pigment particles A becomes narrow, so that the pigment particles A can be uniformly fixed on the surface of the printing medium with a more uniform particle size and a less amount of surface irregularities. As a result, it is considered that the pigment particles A are improved in adhesion properties to the printing medium.

It is considered that the same effects as described as to the aforementioned pigment particles A are also caused on the polymer particles B. That is, when the polydispersity index of the polymer particles B is small, the particle size distribution of the polymer particles B becomes narrow, so that the polymer particles B can be uniformly fixed on the surface of the printing medium with a more uniform particle size and a less amount of surface irregularities. As a result, it is considered that the polymer particles B are improved in adhesion properties to the printing medium.

Moreover, since the pigment particles A and the polymer particles B each have a narrow particle size distribution and therefore the particle sizes thereof become uniform, it is considered that electric charge repulsion between the pigment particles A and between the polymer particles B becomes equalized, so that the resulting ink can be improved in storage stability.

In addition, in the case where the ink further contains an antiseptic compound, it is considered that since the antiseptic compound is unadsorbed onto the pigment particles A or the polymer particles B owing to adequate ionicity or hydrophobicity thereof, the pigment particles A and the polymer particles B can be maintained in a stable state, and it is also possible to suppress propagation of fungi in the ink, so that the ink can be prevented from suffering from flocculation thereof and therefore improved in stability in the course of formation of a printed surface. For this reason, it is considered that since the pigment particles A and the polymer particles B are allowed to spread uniformly over the surface of the printing medium, a uniform coating film of the ink can be formed and fixed on the surface of the printing medium, and therefore the resulting printed material can be improved in adhesion properties.

As a result, it is considered that the ink is excellent in adhesion properties and storage stability, and it is possible to obtain a high-quality printed material.

[Aqueous Gravure Ink 1]

The aqueous gravure ink 1 contains the pigment particles A, the polymer particles B and water, the aqueous gravure ink 1 being capable of satisfying the following requirement 1:
Requirement 1: an average particle size of whole particles in the aqueous gravure ink is not less than 150 nm and not more than 500 nm, and a polydispersity index in a particle size distribution of the whole particles is not less than 0.10 and not more than 0.30.

(Average Particle Size of whole Particles Including Pigment Particles A and Polymer Particles B)

The average particle size of the whole particles including the pigment particles A and the polymer particles B in the ink 1 of the present invention is not less than 150 nm and not more than 500 nm from the viewpoint of improving storage stability of the resulting ink and rub fastness of the resulting printed material. The average particle size of the whole particles including the pigment particles A and the polymer particles B may be controlled by subjecting the whole particles to pulverization and dispersion treatment by conventionally known methods.
The average particle size of the whole particles including the pigment particles A and the polymer particles B is preferably not less than 200 nm, more preferably not less than 240 nm, even more preferably not less than 280 nm and further even more preferably not less than 300 nm, and is also preferably not more than 450 nm, more preferably not more than 420 nm, even more preferably not more than 400 nm and further even more preferably not more than 380 nm.
The average particle size may be measured by the method described in Examples below.

(Polydispersity Index in Particle Size Distribution of Whole Particles)

The polydispersity index in a particle size distribution of the whole particles including the pigment particles A and the polymer particles B in the ink 1 of the present invention is not less than 0.10 and not more than 0.30 from the viewpoint of improving storage stability of the resulting ink and rub fastness of the resulting printed material.
The term "polydispersity index (PDI)" as used herein means an index for evaluating the width (breadth) of a particle size distribution of particles, and may be measured by a dynamic light scattering method and determined by analysis using a cumulant method described in "Polymer Structure (2): Scattering Experiments and Morphological Observation: Chapter 1, Light Scattering" published by Kyoritsu Publishing Co., Ltd., and edited by The Society of Polymer Science, Japan, or "J. Chem. Phys.", 70(B), 15 Apl., 3965 (1979).
The polydispersity index of the whole particles is preferably not less than 0.11, more preferably not less than 0.12, even more preferably not less than 0.15 and further even more preferably not less than 0.18, and is also preferably not more than 0.30, more preferably not more than 0.29, even more preferably not more than 0.28 and further even more preferably not more than 0.27, from the same viewpoint as described above.
The polydispersity index of the whole particles may be measured by the method described in Examples below.
The average particle size and the polydispersity index of the whole particles may be suitably controlled by adjusting a primary particle size of the pigment, and the dispersing conditions such as a dispersion strength, a dispersing time and the like, which are used when dispersing the pigment in a medium such as water, etc. In addition, as the particles, there may also be selectively used commercially available products that are capable of satisfying the aforementioned average particle size and polydispersity index.

[Aqueous Gravure Ink 2]

The aqueous gravure ink 2 contains the pigment particles A, the polymer particles B and water, the aqueous gravure ink 2 being capable of satisfying the following requirement:

Requirement 2: an average particle size of the pigment particles A is not less than 140 nm and not more than 550 nm, and a polydispersity index in a particle size distribution of the pigment particles A is not less than 0.08 and not more than 0.32, and
an average particle size of the polymer particles B is not less than 30 nm and not more than 220 nm, and a polydispersity index in a particle size distribution of the polymer particles B is not less than 0.08 and not more than 0.32.

(Average Particle Size of Pigment Particles A)

The average particle size of the pigment particles A in the ink 2 of the present invention is not less than 140 nm and not more than 550 nm from the viewpoint of improving adhesion properties and storage stability of the resulting ink. The average particle size of the pigment particles A may be suitably controlled by subjecting the pigment particles A to pulverization and dispersion treatments by conventionally known methods.

The average particle size of the pigment particles A is preferably not less than 150 nm, more preferably not less than 200 nm and even more preferably not less than 250 nm, and is also preferably not more than 500 nm, more preferably not more than 490 nm and even more preferably not more than 450 nm.

The average particle size of the pigment particles A may be measured by the method described in Examples below.

(Polydispersity Index in Particle Size Distribution of Pigment Particles A)

The polydispersity index in a particle size distribution of the pigment particles A in the ink 2 of the present invention is not less than 0.08 and not more than 0.32 from the viewpoint of improving adhesion properties and storage stability of the resulting ink.

The "polydispersity index (PDI)" as used herein has the same definition as specified above.

The polydispersity index of the pigment particles A is preferably not less than 0.10, more preferably not less than 0.11 and even more preferably not less than 0.12, and is also preferably not more than 0.30, more preferably not more than 0.29 and even more preferably not more than 0.27, from the same viewpoint as described above.

The polydispersity index of the pigment particles A may be measured by the method described in Examples below.

The average particle size and the polydispersity index of the pigment particles A may be suitably controlled by adjusting a primary particle size of the pigment, and the dispersing conditions such as a dispersion strength, a dispersing time and the like, which are used when dispersing the pigment in a medium such as water, etc. In addition, as the pigment particles A, there may also be selectively used commercially available products that are capable of satisfying the aforementioned average particle size and polydispersity index.

(Average Particle Size of Polymer Particles B)

The average particle size of the polymer particles B is not less than 30 nm and not more than 220 nm from the viewpoint of improving adhesion properties and storage stability of the resulting ink.

The average particle size of the polymer particles B is preferably not less than 32 nm, more preferably not less than 40 nm and even more preferably not less than 50 nm, and is also preferably not more than 200 nm, more preferably not more than 180 nm and even more preferably not more than 150 nm, from the same viewpoint as described above.

In addition, the average particle size of the polymer particles B is preferably smaller than the average particle size of the pigment particles A from the viewpoint of improving adhesion properties and storage stability of the resulting ink. The difference between the average particle size of the polymer particles B and the average particle size of the pigment particles A is preferably not less than 70 nm, more preferably not less than 100 nm, even more preferably not less than 150 nm and further even more preferably not less than 180 nm, and is also preferably not more than 350 nm, more preferably not more than 320 nm and even more preferably not more than 290 nm, from the same viewpoint as described above.

(Polydispersity Index in Particle Size Distribution of Polymer Particles B)

The polydispersity index in a particle size distribution of the polymer particles B is not less than 0.08 and not more than 0.32 from the viewpoint of improving adhesion properties and storage stability of the resulting ink.

The polydispersity index of the polymer particles B is preferably not less than 0.09, more preferably not less than 0.10 and even more preferably not less than 0.11, and is also preferably not more than 0.30, more preferably not more than 0.29 and even more preferably not more than 0.28, from the same viewpoint as described above.

The average particle size and the polydispersity index of the polymer particles B may be measured by the respective methods described in Examples below.

The average particle size and the polydispersity index of the polymer particles B may be suitably controlled by adjusting the dispersing conditions such as a dispersion strength, a dispersing time and the like, which are used when dispersing the polymer in a medium such as water, etc. In addition, as the polymer particles B, there may also be selectively used commercially available products that are capable of satisfying the aforementioned average particle size and polydispersity index.

The specific examples and suitable examples of the pigment particles A, the polymer constituting the pigment particles A, the contents of respective constitutional units in the polymer constituting the pigment particles A, the process for producing the polymer constituting the pigment particles A, the process for producing the pigment-containing polymer particles A, the polymer particles B and the like, which are used in the ink 1, are identical to specific examples and suitable examples of those used in the ink 2.

In addition, the specific examples and suitable examples, etc., of the antiseptic compound, the surfactant, the other components, the contents of the respective components in the aqueous gravure ink, and the printing medium, which are used in the ink 1, are identical to specific examples and suitable examples, etc., of those used in the ink 2.

In the following, common items of the inks 1 and 2 of the present invention are explained.

<Pigment Particles A>

The pigment particles A used in the inks 1 and 2 of the present invention may be either inorganic pigment particles or organic pigment particles.

Examples of an inorganic pigment constituting the pigment particles A include carbon blacks, metal oxides and the like. The carbon blacks are preferably used for black inks. Examples of the carbon blacks include furnace blacks, thermal lamp blacks, acetylene blacks, channel blacks and the like. As a pigment for white inks, there may be used white pigments formed of metal oxides such as titanium dioxide, zinc oxide, silica, alumina and magnesium oxide, etc.

Examples of an organic pigment constituting the pigment particles A include azo pigments, diazo pigments, phthalocyanine pigments, quinacridone pigments, isoindolinone pigments, dioxazine pigments, perylene pigments, perinone pigments, thioindigo pigments, anthraquinone pigments, quinophthalone pigments and the like.

The hue of these pigments is not particularly limited. In chromatic inks, there may be used any of chromatic pigments having a yellow color, a magenta color, a cyan color, a red color, a blue color, an orange color, a green color, etc.

In the case of using the white pigment, titanium dioxide is preferably used from the viewpoint of improving dispersibility thereof. Examples of a crystal structure of the titanium dioxide include a rutile type structure, an anatase type structure and a brookite type structure. Among the titanium dioxides having the crystal structures, from the viewpoint of improving stability of crystals, hiding power and availability of the titanium dioxide, the rutile-type titanium oxide is preferably used.

The titanium dioxide used herein may be in the form of an untreated titanium dioxide. However, the titanium dioxide is preferably in the from of a surface-treated titanium dioxide from the viewpoint of attaining good dispersibility of the titanium dioxide. Examples of the surface treatment of the titanium dioxide include a surface treatment with an inorganic material such as alumina, silica, zinc oxide, zirconia, magnesium oxide, etc., a surface treatment with a known hydrophobilizing agent such as a titanium coupling agent, a silane coupling agent, a higher fatty acid metal salts, etc.

The average primary particle size of the titanium dioxide in terms of an arithmetic mean value of major axis diameters of primary particles thereof is preferably not less than 140 nm, more preferably not less than 150 nm and even more preferably not less than 200 nm from the viewpoint of improving whiteness of the resulting white pigment, and is also preferably not more than 450 nm, more preferably not more than 400 nm and even more preferably not more than 350 nm from the viewpoint of improving hiding power of the resulting white pigment.

Examples of commercially available products of the rutile-type titanium dioxide include "TIPAQUE R" (tradename) series products, "TIPAQUE CR" (tradename) series products and "TIPAQUE PF" (tradename) series products all available from Ishihara Sangyo Kaisha, Ltd.; "R" (tradename) series products available from Sakai Chemical Industry Co., Ltd.; "JR" (tradename) series products and "MT" (tradename) series products both available from TAYCA Corporation; "KURONOS KR" (tradename) series products available from Titan Kogyo Co., Ltd.; "TR" (tradename) series products available from Huntsmann Corporation; and the like.

As the suitable configuration of the pigment particles A used in the present invention, there may be mentioned self-dispersible pigment particles and pigment particles formed by incorporating the pigment into the polymer. From the viewpoint of improving dispersion stability of the pigment, preferred is the configuration of pigment particles formed by incorporating the pigment into the polymer, i.e., polymer particles A containing the pigment (hereinafter also referred to merely as "pigment-containing polymer particles A"). The "pigment-containing polymer particles A" as used in the present specification are intended to include those particles having a configuration in which the pigment is incorporated in the polymer, a configuration in which the pigment is partially exposed onto the surface of respective particles formed of the polymer and the pigment, a configuration in which the polymer is adsorbed onto a part of the pigment, etc.

Meanwhile, the self-dispersible pigment particles as used herein mean pigment particles onto a surface of which at least one hydrophilic group selected from the group consisting of an anionic hydrophilic group and a cationic hydrophilic group is bonded either directly or through the other atom group to thereby render the pigment particles dispersible in a water-based medium without using a surfactant or a polymer.

(Polymer Constituting Pigment Particles A)

The polymer constituting the pigment particles A may be either a water-soluble polymer or a water-insoluble polymer. Of these polymers, preferred is the water-insoluble polymer. That is, the pigment particles A are more preferably the pigment-containing water-insoluble polymer particles A.

The "water-insoluble polymer" as used herein means such a polymer that when the polymer is dried to a constant weight at 105°C for 2 hours and then dissolved in 100 g of water at 25°C until reaching a saturated concentration thereof, the solubility in water of the polymer is less than 10 g. The solubility in water of the water-insoluble polymer is preferably not more than 5 g and more preferably not more than 1 g. In the case where the water-insoluble polymer is in the form of an anionic polymer, the aforementioned solubility means a solubility in water of the polymer whose anionic groups are neutralized completely (i.e., 100%) with sodium hydroxide.

As the polymer used in the pigment particles A, there may be mentioned at least one resin selected from the group consisting of a vinyl-based resin, a polyester resin, a polyurethane resin and the like. Among these resins, from the viewpoint of improving dispersion stability of the pigment, preferred is a vinyl-based resin obtained by addition-polymerizing a vinyl monomer such as a vinyl compound, a vinylidene compound, a vinylene compound and the like. In addition, there may also be used the polymer crosslinked with a crosslinking agent.

The polymer constituting the pigment particles A is preferably the vinyl-based resin obtained by subjecting the vinyl monomer to addition polymerization from the viewpoint of improving storage stability of the resulting ink.

As the vinyl-based resin, preferred is an acrylic resin that contains a constitutional unit derived from (a1) an ionic monomer and a constitutional unit derived from (a2) a nonionic monomer.

The ionic monomer (a1) is preferably an anionic monomer. Examples of the anionic monomer include carboxylic acid monomers, sulfonic acid monomers and the like. Among these monomers, preferred are carboxylic acid monomers, more preferred is at least one monomer selected from the group consisting of acrylic acid and methacrylic acid.

The nonionic monomer (a2) is in the form of a monomer having high affinity to water or a water-soluble organic solvent. As the nonionic monomer (a2), preferred are a polyalkylene glycol (meth)acrylate and an alkoxy polyalkylene glycol (meth)acrylate, and more preferred is methoxy polyethylene glycol (n = 1 to 30) (meth)acrylate. Specific examples of commercially available products of the nonionic monomer include "NK ESTER M" series products available from Shin-Nakamura Chemical Co., Ltd.; "BLEMMER PE" series products, "BLEMMER PME" series products, "BLEMMER 50PEP" series products and "BLEMMER 50POEP" series products all available from NOF Corporation; and the like.

The polymer constituting the pigment particles A may further contain a constitutional unit derived from (a3) a hydrophobic monomer. Examples of the hydrophobic monomer (a3) include alkyl (meth)acrylates, aromatic group-containing monomers, macromonomers containing a polymerizable functional group at one terminal end thereof, and the like.

The alkyl (meth)acrylates are preferably those alkyl (meth)acrylates containing an alkyl group having not less than 6 and not more than 18 carbon atoms. Examples of the alkyl (meth)acrylates include methyl (meth)acrylate, ethyl (meth)acrylate, (iso)propyl (meth)acrylate, (*iso-* or *tert-*)butyl (meth)acrylate, cyclohexyl (meth)acrylate, 2-ethylhexyl (meth)acrylate, (iso)octyl (meth)acrylate, and the like.

As the aromatic group-containing monomers, preferred are vinyl-based monomers containing an aromatic group having not less than 6 and not more than 22 carbon atoms, and more preferred are styrene-based monomers, aromatic group-containing (meth)acrylates and the like. Examples of the preferred styrene-based monomers include styrene, 2-methyl styrene, $\alpha$-methyl styrene, vinyl toluene, divinyl benzene and the like. Examples of the preferred aromatic group-containing (meth)acrylates include benzyl (meth)acrylate and the like.

(Contents of Respective Constitutional Units in Polymer Constituting Pigment Particles A)

The contents of the constitutional units derived from the components (a1) to (a3) in the polymer constituting the pigment particles A are as follows from the viewpoint of improving dispersion stability of the resulting ink.

The content of the component (a1) is preferably not less than 5% by mass, more preferably not less than 10% by mass and even more preferably not less than 15% by mass, and is also preferably not more than 40% by mass, more preferably not more than 30% by mass and even more preferably not more than 20% by mass.

The content of the component (a2) is preferably not less than 20% by mass, more preferably not less than 40% by mass and even more preferably not less than 60% by mass, and is also preferably not more than 95% by mass, more preferably not more than 90% by mass and even more preferably not more than 85% by mass.

The content of the component (a3) is preferably not more than 15% by mass, more preferably not more than 10% by mass and even more preferably not more than 5% by mass.

(Production of Polymer Constituting Pigment Particles A)

The polymer constituting the pigment particles A may be produced by copolymerizing a monomer mixture containing the ionic monomer (a1), the nonionic monomer (a2), etc., by a known solution polymerization method and the like.

The weight-average molecular weight of the aforementioned polymer is preferably not less than 3,000, more preferably not less than 5,000 and even more preferably not less than 10,000, and is also preferably not more than 100,000, more preferably not more than 50,000 and even more preferably not more than 30,000, from the viewpoint of improving dispersion stability of the resulting ink as well as from the viewpoint of improving rub fastness and adhesion properties of the resulting printed material.

The acid value of the aforementioned polymer is preferably not less than 100 mgKOH/g, more preferably not less than 150 mgKOH/g and even more preferably not less than 200 mgKOH/g, and is also preferably not more than 350 mgKOH/g, more preferably not more than 300 mgKOH/g and even more preferably not more than 250 mgKOH/g, from the viewpoint of improving dispersibility of the pigment and adsorptivity of the polymer to the pigment.

Meanwhile, the weight-average molecular weight and the acid value may be measured by the respective methods described in Examples below.

(Production of Pigment-Containing Polymer Particles A)

The pigment-containing polymer particles A are in the form of particles formed by adsorbing the polymer onto the surface of the pigment, preferably in the form of pigment-enclosing particles, and the pigment particles can be stably dispersed in the ink.

The pigment-containing polymer particles A can be efficiently produced in the form of a dispersion thereof by a process including the following step I, and may also be produced by a process further including the following steps II and III in addition to the step I. In the case where no organic solvent is used in the step I, the step II can be omitted. The step III is an optional step.

Step I: subjecting a mixture containing the polymer and the pigment, if required together with an organic solvent, a neutralizing agent, a surfactant, etc., to dispersion treatment to thereby obtain a dispersion of the pigment-containing polymer particles;
Step II: removing the organic solvent from the dispersion obtained in the step I to thereby obtain a water dispersion of the pigment-containing polymer particles; and
Step III: mixing the dispersion obtained in the step I or the water dispersion obtained in the step II with a crosslinking agent to subject the dispersion or the water dispersion to crosslinking treatment, thereby obtaining a water dispersion of the pigment-containing crosslinked polymer particles.

In the case where the polymer constituting the pigment particles A is an anionic polymer containing anionic groups, the anionic groups contained in the polymer may be neutralized using a neutralizing agent. When using the neutralizing agent, the anionic groups contained in the polymer are preferably neutralized such that the pH value of the resulting dispersion falls within the range of not less than 7 and not more than 11. Examples of the neutralizing agent include bases such as lithium hydroxide, sodium hydroxide, potassium hydroxide, ammonia, various amines and the like. In addition, the polymer may be previously neutralized.

The neutralization degree of the anionic groups in the aforementioned polymer is preferably not less than 10 mol% and not more than 100 mol%, more preferably not less than 20 mol% and not more than 90 mol% and even more preferably not less than 30 mol% and not more than 80 mol%, on the basis of the anionic groups, from the viewpoint of improving dispersion stability of the resulting ink.

When the aforementioned polymer contains the anionic groups, the neutralization degree of the anionic groups in the polymer as used herein may be determined as an equivalent of the neutralizing agent used, on the basis of the anionic groups in the aforementioned polymer, according to the following formula. In the case where the equivalent of the neutralizing agent used is not more than 100 mol%, the equivalent of the neutralizing agent used has the same meaning as the neutralization degree of the anionic groups in the polymer. On the other hand, in the case where the equivalent of the neutralizing agent used exceeds 100 mol%, it means that the neutralizing agent is used in an excessively large amount relative to the acid groups in the polymer, and in such a case, the neutralization degree of the polymer dispersant (a) is regarded as being 100 mol%.

$$\text{Equivalent (mol\%) of neutralizing agent used} = [\{\text{mass (g) of neutralizing agent added/equivalent of neutralizing agent}\}/[\{\text{weighted mean acid value (mgKOH/g) of polymer dispersant (a) x mass (g) of polymer dispersant (a)}\}/(56 \times 1000)]] \times 100$$

In the case where the polymer constituting the pigment-containing polymer particles A contains the anionic groups, the crosslinking agent is preferably in the form of a compound containing a functional group that is capable of reacting with the anionic groups. Examples of the crosslinking agent include a compound containing two or more epoxy groups in a molecule thereof, a compound containing two or more oxazoline groups in a molecule thereof, and a compound containing two or more isocyanate groups in a molecule thereof. Among these crosslinking agents, preferred is the compound containing not less than 2 and not more than 4 epoxy groups in a molecule thereof, and more preferred is trimethylolpropane polyglycidyl ether.

The crosslinking rate of acid components in the polymer constituting the pigment-containing polymer particles A is preferably not less than 5 mol%, more preferably not less than 10 mol% and even more preferably not less than 20 mol%, and is also preferably not more than 80 mol%, more preferably not more than 70 mol% and even more preferably not more than 60 mol%, from the viewpoint of improving storage stability of the resulting ink.

The content of the polymer constituting the pigment particles A in the ink is preferably not less than 0.1% by mass, more preferably not less than 0.2% by mass and even more preferably not less than 0.3% by mass, and is also preferably not more than 10% by mass, more preferably not more than 5% by mass and even more preferably not more than 2% by mass, from the viewpoint of improving rub fastness and adhesion properties of the resulting printed material.

The mass ratio of the polymer constituting the pigment particles A to the pigment [polymer/pigment] in the ink is preferably from 0.2/99.8 to 70/30, more preferably from 0.5/99.5 to 60/40 and even more preferably from 1/99 to 50/50, from the viewpoint of improving storage stability of the resulting ink.

The average particle size of the pigment particles A is preferably not less than 140 nm, more preferably not less than 150 nm and even more preferably not less than 200 nm, and is also preferably not more than 550 nm, more preferably not more than 500 nm and even more preferably not more than 490 nm, from the viewpoint of improving storage stability of the resulting ink as well as from the viewpoint of improving rub fastness and adhesion properties of the resulting printed material.

The average particle size of the pigment particles A may be measured by the method described in Examples below.

Specific examples of the vinyl-based resin as the polymer used for producing the pigment particles A include polyacrylic acids such as "ARON AC-10SL" available from Toagosei Co., Ltd., etc.; styrene-acrylic resins such as "JONCRYL 67", "JONCRYL 611", "JONCRYL 678", "JONCRYL 680", "JONCRYL 690" and "JONCRYL 819" all available from BASF Japan, Ltd., etc.; and the like.

<Polymer Particles B>

The inks 1 and 2 of the present invention respectively contain pigment-free polymer particles B (hereinafter also referred to merely as "polymer particles B") from the viewpoint of forming a film of the ink on a printing medium to thereby improve rub fastness and adhesion properties of the resulting printed material. The polymer particles B contain no pigment and are preferably in the form of water-insoluble polymer particles constituted of a polymer solely.

Examples of the polymer constituting the polymer particles B include a vinyl-based resin, a polyester resin, a polyurethane resin, a polystyrene resin, a styrene-acrylic resin and the like. Among these resins, from the viewpoint of improving storage stability of the resulting ink as well as from the viewpoint of improving rub fastness and adhesion properties of the resulting printed material, preferred is at least one resin selected from the group consisting of a vinyl-based resin, a polyester resin and a polyurethane resin, and more preferred is a vinyl-based resin. In addition, as the polymer constituting the polymer particles B, there may also be used such a polymer that is crosslinked with a crosslinking agent.

The polymer particles B are preferably used in the form of a water dispersion prepared by dispersing the polymer particles B in water. The polymer particles B used herein may be either an appropriately synthesized product or a commercially available product.

The aforementioned vinyl-based resin is preferably a water-insoluble vinyl-based resin that is produced by copolymerizing a monomer mixture B containing (b1) an ionic monomer and (b2) a hydrophobic monomer.

As the component (b1), there may be used the same monomers as described as to the aforementioned component (a1). Among these monomers, from the viewpoint of improving storage stability of the resulting ink as well as from the viewpoint of improving rub fastness and adhesion properties of the resulting printed material, preferred are anionic monomers, more preferred are carboxylic acid monomers, and even more preferred is at least one monomer selected from the group consisting of acrylic acid and methacrylic acid.

Examples of the component (b2) include the same alkyl (meth)acrylates, aromatic group-containing monomers and macromonomers as described above as to the aforementioned component (a3), etc. Among these monomers, preferred are alkyl (meth)acrylates, more preferred are those alkyl (meth)acrylates containing an alkyl group having not less than 1 and not more than 22 carbon atoms and preferably not less than 1 and not more than 10 carbon atoms, even more preferred are those compounds illustrated above; and further even more preferred is a combination of methyl (meth)acrylate and 2-ethylhexyl (meth)acrylate.

(Contents of Respective Constitutional Units in Polymer Constituting Pigment Particles B)

The contents of constitutional units derived from the components (b1) and (b2) in the polymer constituting the polymer particles B are as follows from the viewpoint of improving storage stability of the resulting ink as well as from the viewpoint of improving rub fastness and adhesion properties of the resulting printed material.

The content of the component (b1) is preferably not less than 1% by mass, more preferably not less than 3% by mass and even more preferably not less than 5% by mass, and is also preferably not more than 30% by mass, more preferably not more than 20% by mass and even more preferably not more than 15% by mass.

The content of the component (b2) is preferably not less than 50% by mass, more preferably not less than 60% by mass and even more preferably not less than 70% by mass, and is also preferably not more than 99% by mass, more preferably not more than 97% by mass and even more preferably not more than 95% by mass.

The aforementioned polymer may be produced by copolymerizing a monomer mixture containing the ionic monomer (b1), the nonionic monomer (a2) and the like by a conventionally known solution polymerization method, etc.

Examples of commercially available products of the dispersion of the polymer particles B include dispersions of acrylic resins such as "Neocryl A1127" (anionic self-crosslinkable water-based acrylic resin) available from DSM Neo Resins, Inc., and "JONCRYL 390" available from BASF Japan, Ltd., etc.; urethane-based resins such as "WBR-2018" and "WBR-2000U" both available from Taisei Fine Chemical Co., Ltd., etc.; styrene-butadiene resins such as "SR-100" and "SR-102" both available from Nippon A & L Inc., etc.; styrene-acrylic resins such as "JONCRYL 7100", "JONCRYL 7600", "JONCRYL 734", "JONCRYL 780", "JONCRYL 537J", "JONCRYL 538J", "JONCRYL PDX-7164" and "JONCRYL PDX-7775" all available from BASF Japan, Ltd., etc.; and the like.

The weight-average molecular weight of the polymer constituting the polymer particles B is preferably not less than 100,000, more preferably not less than 200,000 and even more preferably not less than 300,000, and is also preferably not more than 2,500,000, more preferably not more than 1,000,000 and even more preferably not more than 600,000, from the viewpoint of improving storage stability of the resulting ink as well as from the viewpoint of improving rub fastness and adhesion properties of the resulting printed material.

The acid value of the polymer constituting the polymer particles B is preferably not less than 20 mgKOH/g, more preferably not less than 30 mgKOH/g and even more preferably not less than 40 mgKOH/g, and is also preferably not more than 70 mgKOH/g, more preferably not more than 65 mgKOH/g and even more preferably not more than 60 mgKOH/g, from the viewpoint of improving storage stability of the resulting ink.

Incidentally, the weight-average molecular weight and the acid value of the polymer b may be measured by the respective methods described in Examples below.

The average particle size of the polymer particles B in the dispersion or the ink is preferably not less than 10 nm, more preferably not less than 20 nm and even more preferably not less than 30 nm, and is also preferably not more than 300 nm, more preferably not more than 200 nm, even more preferably not more than 150 nm and further even more preferably not more than 130 nm, from the viewpoint of improving storage stability of the resulting ink as well as from the viewpoint of improving rub fastness of the resulting printed material.

Incidentally, the average particle size of the polymer particles B may be measured by the method described in Examples below.

<Antiseptic Compound>

The inks 1 and 2 of the present invention preferably respectively contain an antiseptic compound. The antiseptic compound used in the present invention is at least one compound selected from the group consisting of an isothiazolin compound, an aromatic alcohol compound and a pyrithione metal complex. As the antiseptic compound used in the present invention, from the viewpoint of improving storage stability of the resulting ink as well as from the viewpoint of improving rub fastness and adhesion properties of the resulting printed material, more preferred is an isothiazolin compound. It is considered that these antiseptic compounds are capable of not only imparting an antiseptic performance to the ink, but also suppressing flocculation of the ink to thereby improve storage stability of the ink and also improve rub fastness and adhesion properties of the resulting printed material.

(Isothiazolin Compound)

The isothiazolin compound is a compound having a heterocyclic 5-membered ring which contains a nitrogen atom and a sulfur atom. Specific examples of the isothiazolin compound include 5-chloro-2-methyl-4-isothiazolin-3-one, 5-chloro-2-ethyl-4-isothiazolin-3-one, 2-methyl-4-isothiazolin-3-one, 2-ethyl-4-isothiazolin-3-one, 4,5-dichloro-2-methyl-4-isothiazolin-3-one, 2-ethyl-4-isothiazolin-3-one, 2-*n*-octyl-4-isothiazolin-3-one, 5-chloro-2-ethyl-4-isothiazolin-3-one, 5-chloro-2-*t*-octyl-4-isothiazolin-3-one, 4,5-dichloro-2-*n*-octyl-4-isothiazohn-3-one, 4,5-dichloro-2-cyclohexyl-4-isothiazolin-3-one, 1,2-benzisothiazolin-3-one, butyl-benzisothiazolin-3-one and the like.

Among these isothiazolin compounds, preferred is at least one compound selected from the group consisting of 5-chloro-2-methyl-4-isothiazolin-3-one, 5-chloro-2-ethyl-4-isothiazolin-3-one, 2-methyl-4-isothiazolin-3-one, 2-ethyl-4-isothiazolin-3-one, 2-*n*-octyl-4-isothiazolin-3-one, 4,5-dichloro-2-*n*-octyl-4-isothiazolin-3-one, 4,5-dichloro-2-cyclohexyl-4-isothiazolin-3-one, 1,2-benzisothiazolin-3-one and butyl-benzisothiazolin-3-one, more preferred is at least one compound selected from the group consisting of 1,2-benzisothiazolin-3-one, butyl-benzisothiazolin-3-one, 5-chloro-2-methyl-4-isothiazolin-3-one, 2-methyl-4-isothiazolin-3-one and 2-*n*-octyl-4-isothiazolin-3-one, and even more preferred is at least one compound selected from the group consisting of 1,2-benzisothiazolin-3-one, 5-chloro-2-methyl-4-isothiazolin-3-one, 2-methyl-4-isothiazolin-3-one and butyl-benzisothiazolin-3-one.

(Aromatic Alcohol Compound)

Examples of the aromatic alcohol compound include benzyl alcohol, 2-phenyl ethanol, 2-phenoxyethanol, phenoxyisopropanol, 3-(4-chlorophenoxy)-1,2-propanediol and the like. Among these aromatic alcohol compounds, preferred is at least one compound selected from the group consisting of 2-phenoxyethanol and phenoxyisopropanol, and more preferred is 2-phenoxyethanol.

(Pyrithione Metal Complex)

The pyrithione metal complex is a compound constituted of a combination of at least one pyrithione molecule and at least one metal, and more specifically, it is a metal complex of a pyrithione compound such as 2-pyridyl thiol-1-oxide or di(2-pyridyl thiol-1-oxide), etc.

Examples of the metal of the pyrithione metal complex include lithium, sodium, potassium, magnesium, calcium, copper, zinc, bismuth and the like.

Among these pyrithione metal complexes, preferred are a pyrithione sodium complex and a pyrithione zinc complex, and more preferred is a pyrithione zinc complex. The pyrithione zinc complex may be produced by reacting 1-hydroxy-2-pyridinethione (pyrithione acid) or a soluble salt thereof with a zinc salt such as zinc sulfate, etc. as disclosed in US Pat. No. 2,809,971.

The aforementioned antiseptic compounds may be used alone or in combination of any two or more thereof.

<Surfactant>

The aqueous gravure ink of the present invention preferably further contains a surfactant from the viewpoint of improving dispersion stability of the resulting ink as well as from the viewpoint of improving rub fastness and adhesion properties of the resulting printed material.

As the surfactant, from the viewpoint of improving wettability of the resulting ink to a printing medium, preferred is a nonionic surfactant, more preferred is at least one surfactant selected from the group consisting of an acetylene glycol-based surfactant and a silicone-based surfactant, and it is even more preferred that the ink contains an acetylene glycol-based surfactant and a silicone-based surfactant.

As the acetylene glycol-based surfactant, from the same viewpoint as described above, preferred are an acetylene glycol having not less than 8 and not more than 22 carbon atoms and an ethylene adduct of the acetylene glycol, and more preferred is the acetylene glycol having not less than 8 and not more than 22 carbon atoms. The number of carbon atoms contained in the aforementioned acetylene glycol is preferably not less than 10 and more preferably not less than 12, and is also preferably not more than 20, more preferably not more than 18 and even more preferably not more than 16. More specifically, from the viewpoint of improving leveling properties of the resulting ink, as the acetylene glycol-based surfactant, there may be mentioned at least one acetylene glycol selected from the group consisting of 2,4,7,9-tetramethyl-5-decyne-4,7-diol, 3,6-dimethyl-4-octyne-3,6-diol and 2,5-dimethyl-3-hexyne-2,5-diol, and an ethyleneoxide adduct of the acetylene glycol. Of these compounds, preferred is 2,4,7,9-tetramethyl-5-decyne-4,7-diol.

The HLB value of the acetylene glycol-based surfactant is preferably not less than 0, more preferably not less than 1, even more preferably not less than 2 and further even more preferably not less than 2.5, and is also preferably not more than 5, more preferably not more than 4.5, even more preferably not more than 4 and further even more preferably not more than 3.5.

The term "HLB" (Hydrophile Lipophile Balance) value as used herein means the value indicating an affinity of the surfactant to water and oil, and can be calculated according to the following formula by Griffin method.

$$HLB = 20 \times [(\text{molecular weight of hydrophilic group contained in surfactant})/(\text{molecular weight of surfactant})]$$

As the hydrophilic group contained in the surfactant, there may be mentioned, for example, a hydroxy group and an ethyleneoxy group.

Specific examples of commercially available products of the acetylene glycol-based surfactant include "SURFYNOL 104" (2,4,7,9-tetramethyl-5-decyne-4,7-diol; average molar number of addition of EO: 0; HLB: 3.0), "SURFYNOL 104E" (a 50% ethylene glycol-diluted solution of "SURFYNOL 104"), "SURFYNOL 104PG-50" (a 50% propylene glycol-diluted solution of "SURFYNOL 104") and "SURFYNOL 420" (an EO adduct of "SURFYNOL 104"; average molar number of addition of EO: 1.3; HLB: 4.7) all available from Nissin Chemical Co., Ltd., "ACETYLENOL E13T" (average molar number of addition of EO: 1.3; HLB: 4.7) available from Kawaken Fine Chemicals Co., Ltd., and the like.

Examples of the silicone-based surfactant include dimethyl polysiloxane, polyether-modified silicones, amino-modified silicones, carboxy-modified silicones, methylphenyl polysiloxane, fatty acid-modified silicones, alcohol-modified silicones, aliphatic alcohol-modified silicones, epoxy-modified silicones, fluorine-modified silicones, cyclic silicones, alkyl-modified silicones and the like. Of these silicone-based surfactants, polyether-modified silicones are preferred from the viewpoint of improving wettability of the ink to a printing medium.

Specific examples of the polyether-modified silicones include PEG-3 dimethicone, PEG-9 dimethicone, PEG-9 PEG-9 dimethicone, PEG-9 methyl ether dimethicone, PEG-10 dimethicone, PEG-11 methyl ethyl dimethicone, PEG/PPG-20/22 butyl ether dimethicone, PEG-32 methyl ether dimethicone, PEG-9 polydimethylsiloxyethyl dimethicone, lauryl PEG-9 polydimethylsiloxyethyl dimethicone and the like. Of these the polyether-modified silicones, especially preferred is PEG-11 methyl ethyl dimethicone.

Specific examples of commercially available products of the silicone-based surfactant include "KF-6011", "KF-6012", "KF-6013", KF-6015", "KF-6016", "KF-6017", "KF-6028", "KF-6038" and "KF-6043" all available from Shin-Etsu Chemical Co., Ltd., "TEGO wet 240" and "TEGO wet 270" both available from Evonik Japan Co., Ltd., and the like.

The surfactant may also contain the other surfactant(s) in addition to the aforementioned surfactants. As the other surfactant(s), preferred are an anionic surfactant, the other nonionic surfactant than those described above, an amphoteric surfactant and the like.

The aforementioned surfactants may be used alone or in combination of any two or more thereof.

<Other Components>

The inks 1 and 2 of the present invention may also contain various additives as optional components, such as a water-soluble organic solvent, a pH modifier, a viscosity controller, a defoaming agent, a rust preventive, etc., according to the applications thereof.

(Contents of Respective Components in Aqueous Gravure Ink)

The contents of the respective components in the inks 1 and 2 of the present invention are as follows from the viewpoint of improving dispersion stability of the resulting ink as well as from the viewpoint of improving rub fastness and adhesion properties of the resulting printed material. Meanwhile, the inks as used herein mean those inks that are controlled such a state as to be ready for direct use in printing, and the aforementioned contents of the respective components indicate those in the inks that are kept in such a state.

The content of the pigment particles A in each of the inks 1 and 2 of the present invention is preferably not less than 2% by mass, more preferably not less than 5% by mass, even more preferably not less than 8% by mass and further even more preferably not less than 10% by mass, and is also preferably not more than 40% by mass, more preferably not more than 35% by mass, even more preferably not more than 30% by mass and further even more preferably not more than 28% by mass.

The content of the polymer particles B in each of the inks 1 and 2 of the present invention is preferably not less than 2% by mass, more preferably not less than 4% by mass and even more preferably not less than 5% by mass, and is also preferably not more than 25% by mass, more preferably not more than 20% by mass and even more preferably not more than 15% by mass, from the viewpoint of improving rub fastness or adhesion properties of the resulting printed material.

The mass ratio of the polymer particles B to the pigment particles A [polymer particles B/pigment particles A] in each of the inks 1 and 2 of the present invention is preferably not less than 0.2, more preferably not less than 0.3 and even more preferably not less than 0.4, and is also preferably not more than 3, more preferably not more than 2 and even more preferably not more than 1, from the viewpoint of improving stability of the resulting ink.

The content of the antiseptic compound in each of the inks 1 and 2 of the present invention is preferably not less than 0.002% by mass, more preferably not less than 0.004% by mass, even more preferably not less than 0.01% by mass, further even more preferably not less than 0.04% by mass and still further even more preferably not less than 0.06% by mass, and is also preferably not more than 1% by mass, more preferably not more than 0.5% by mass and even more preferably not more than 0.3% by mass.

The content of the surfactant, in particular, the nonionic surfactant, in each of the inks 1 and 2 of the present invention is preferably not less than 0.1% by mass, more preferably not less than 0.2% by mass and even more preferably not less than 0.5% by mass, and is also preferably not more than 5% by mass, more preferably not more than 4% by mass and even more preferably not more than 3% by mass, from the viewpoint of improving wettability of these inks to a printing medium.

The content of the acetylene glycol-based surfactant in each of the inks 1 and 2 of the present invention is preferably not less than 0.3% by mass, more preferably not less than 0.5% by mass and even more preferably not less than 0.7% by mass, and is also preferably not more than 5% by mass, more preferably not more than 4% by mass and even more preferably not more than 3.5% by mass, from the viewpoint of improving wettability of these inks to a printing medium.

The mass ratio of the acetylene glycol-based surfactant to a total amount of the acetylene glycol-based surfactant and the silicone-based surfactant [acetylene glycol-based surfactant/total amount of surfactants] in each of the inks 1 and 2 of the present invention is preferably not less than 0.1, more preferably not less than 0.2 and even more preferably not less than 0.3, and is also preferably not more than 1.2, more preferably not more than 1 and even more preferably not more than 0.8.

The content of water in each of the inks 1 and 2 of the present invention is preferably not less than 50% by mass, more preferably not less than 52% by mass and even more preferably not less than 55% by mass, and is also preferably not more than 70% by mass, more preferably not more than 68% by mass and even more preferably not more than 65% by mass.

The Zahn Cup viscosity of each of the inks 1 and 2 of the present invention as measured at 20°C is preferably not less than 10 seconds, more preferably not less than 12 seconds and even more preferably not less than 13 seconds, and is also preferably not more than 25 seconds, more preferably not more than 20 seconds and even more preferably not more than 18 seconds, from the viewpoint of improving storage stability of the resulting ink as well as from the viewpoint of improving rub fastness and adhesion properties of the resulting printed material.

The pH value of each of the inks 1 and 2 of the present invention as measured at 20°C is preferably not less than 5.5, more preferably not less than 6.0 and even more preferably not less than 6.5 from the viewpoint of improving dispersion stability of the resulting ink, and is also preferably not more than 11.0, more preferably not more than 10.5 and even more preferably not more than 10.0 from the viewpoint of improving the resistance of members to the ink and suppressing skin irritation.

<Printing Medium>

The printing medium used upon conducting gravure printing using the inks 1 and 2 of the present invention is not particularly limited. As the printing medium, from the viewpoint of improving adhesion properties of the resulting printed material, there may be suitably used a low-liquid absorbing or non-liquid adsorbing printing medium. Examples of the printing medium include a low-liquid absorbing paper such as a coated paper, an art paper, a synthetic paper, a processed paper, etc.; a non-liquid adsorbing resin film such as a polyester film, a polyethylene film, a polypropylene film, a polystyrene film, a polyvinyl chloride film, a nylon film, etc.; and the like. Of these printing media, from the viewpoint of allowing the ink to exhibit excellent adhesion properties thereto even without being heated to a high temperature, it is preferred that the resin film whose heating temperature should be limited is used as the printing medium.

In recent years, the resin film has been progressively used as the printing medium. The ink 1 of the present invention is excellent in rub fastness of the obtained printed material when printed on the resin film. As the resin film, from the viewpoint of improving suitability to after-processing treatments such as punching treatment after producing the printed material, etc., preferred are a polyester film and a polypropylene film. These resin films may be in the form of either a biaxially oriented film, a monoaxially oriented film or a non-oriented film.

In addition, from the viewpoint of improving gravure printability, there may also be used a resin film that is subjected to discharge processing surface treatments such as corona discharge treatment, plasma discharge treatment, etc.

EXAMPLES

In the following Production Examples, Examples and Comparative Examples, the "part(s)" and "%" indicate "part(s) by mass" and "% by mass", respectively, unless otherwise specified. The respective properties were measured by the following methods.

(1) Measurement of Weight-Average Molecular Weight of Polymer

The weight-average molecular weight of the polymer was measured by gel chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in $N;N$-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B (F-550, F-80, F-10, F-1, A-1000), PStQuick C (F-288, F-40, F-4, A-5000, A-500] all available from Tosoh Corporation as a reference standard substance.

A sample to be measured was prepared by mixing 0.1 g of the resin with 10 mL of the aforementioned eluent in a glass vial, stirring the resulting mixture at 25°C for 10 hours with a magnetic stirrer, and then subjecting the mixture to filtration treatment through a syringe filter "DISMIC-13HP PTFE" (0.2 $\mu$m) available from Advantec Co., Ltd.

(2) Measurement of Acid Value of Polymer

In an automatic potentiometric titrator (power burette; "Model No.: APB-610") available from Kyoto Electronics Manufacturing Co., Ltd., a resin (water-insoluble polymer) was dissolved in a titrant solution prepared by mixing toluene and acetone at a volume ratio [acetone: toluene] of 2:1, and the resulting solution was subjected to titration with a 0.1N potassium hydroxide/ethanol solution by a potentiometric titration method until reaching an end point of the titration observed as an inflection point of the titration curve. The acid value of the polymer was calculated from an amount (titer) of the potassium hydroxide solution used in the titration until reaching the end point.

(3) Measurement of Solid Contents of Pigment Water Dispersion and Polymer Emulsion

Using an infrared moisture meter "FD-230" available from Kett Electric Laboratory, 5 g of a sample to be measured was dried at a drying temperature of 150°C under a measuring mode 96 (monitoring time: 2.5 minutes/variation range: 0.05%), and then a water content (%) of the sample to be measured was measured to calculate a solid content thereof according to the following formula.

$$\text{Solid Content (\%)} = 100 - \text{Water Content (\%) of Sample to be Measured}$$

(4) Measurement of Average Particle Sizes and Polydispersity Indices of Pigment Water Dispersion and Polymer Emulsion

The cumulant average particle sizes of particles in the pigment water dispersion and the polymer emulsion were respectively measured using a laser particle analyzing system "Model No.: ELS-8000" (cumulant analysis) available from Otsuka Electrics Co., Ltd. The cumulant average particle sizes thus measured were respectively defined as average particle sizes of the particles in the pigment water dispersion and the polymer emulsion. In addition, the polydispersity indices of the particles in the pigment water dispersion and the polymer emulsion were also determined.

As the sample to be measured, there was used a dispersion liquid prepared by diluting the dispersion or emulsion with water such that a concentration of the particles in the resulting dispersion liquid was adjusted to 5 x 10$^{-3}$% by mass. The measurement was conducted under the conditions including a temperature of 25°C, an angle between incident light and detector of 90° and a cumulative number of 100 times, and a refractive index of water (1.333) was input to the analyzing system as a refractive index of the dispersing medium.

Production Example I-1 (Production of Pigment Water Dispersion Liquid I-1 Containing Pigment-Containing Polymer Particles AI1)

Two hundred thirty six parts of ion-exchanged water were weighed and placed in a 2 L-capacity flask, and then 60 parts of a styrene-acrylic polymer "JONCRYL 690" (tradename; solid content: 20%; weight-average molecular weight: 16500; acid value: 240 mgKOH/g; Tg: 105°C) available from BASF AG and 36.5 parts of a 5N sodium hydroxide solution (sodium neutralization degree: 60 mol%) were added to the flask. The contents of the flask were stirred using an anchor blade at 200 rpm for 2 hours, thereby obtaining 332.5 parts of a polymer aqueous solution (solid content: 19.9%).

A 500 mL plastic container was charged with 554 parts of 0.8 mmϕ zirconia beads "XTZ Ball" (tradename) available from Nikkato Corporation at a beads packing rate of 30% by volume, and 25.1 parts of the polymer aqueous solution, 200 parts of titanium dioxide "CR-90" (tradename; titanium oxide by chlorine method (rutile-type); average primary particle size: 250 nm; Al/Si-treated titanium oxide) as a pigment available from Ishihara Sangyo Kaisha, Ltd., and 194.9 parts of ion-exchanged water were added to the container, and then the contents of the container were subjected to dispersion treatment using a paint shaker "PS-1943" (tradename) available from Asada Iron Works Co., Ltd., for 2 hours. Thereafter, the obtained dispersion was allowed to pass through a 200-mesh wire screen to remove the zirconia beads therefrom, thereby obtaining 974 parts of a pigment water dispersion liquid I-1 having a solid content of 50% and containing pigment-containing polymer particles AI1 (pigment content: 48.8%; average particle size: 154 nm).

Production Examples 1-2 to 1-6 (Production of Pigment Water Dispersion Liquids I-2 to I-6 Containing Pigment-Containing Polymer Particles AI2 to AI6)

The same procedure as in Production Example I-1 was repeated except that the pigment dispersing conditions used in Production Example I-1 were changed to those shown in Table 1, thereby obtaining pigment water dispersion liquids I-2 to I-6 each having a solid content of 50% and containing pigment-containing polymer particles AI2 to AI6, respectively. The results are shown in Table 1.

TABLE 1

| | Pigment water dispersion liquid | Polymer | Dispersing conditions | | Results |
|---|---|---|---|---|---|
| | | | Diameter of zirconia beads (mm) | Dispersing time | Average particle size (nm) |
| Production Example I-1 | Pigment water dispersion liquid I-1 | "JONCRYL 690" | 0.8 | 2 hr | 154 |
| Production Example I-2 | Pigment water dispersion liquid I-2 | "JONCRYL 690" | 0.8 | 1 hr | 340 |
| Production Example I-3 | Pigment water dispersion liquid I-3 | "JONCRYL 690" | 0.8 | 0.5 hr | 486 |
| Production Example I-4 | Pigment water dispersion liquid I-4 | "JONCRYL 690" | 0.3 | 1 hr | 180 |
| Production Example I-5 | Pigment water dispersion liquid I-5 | "JONCRYL 690" | 3.0 | 1 hr | 455 |
| Production Example I-6 | Pigment water dispersion liquid I-6 | "JONCRYL 690" | 0.3 | 0.2 hr | 533 |

Example I-1 (Preparation of Aqueous Gravure Ink I-1)

A production container was charged with 52.5 parts of the pigment water dispersion liquid I-1 containing the pigment-containing polymer particles AI1 obtained in Production Example I-1 (corresponding to a pigment content of

EP 3 901 224 A1

25% and a content of the pigment particles AI1 of 26% in the ink), and then 26.7 parts of a polymer emulsion "JONCRYL PDX-7775" (tradename; styrene-acrylic polymer emulsion; average particle size: 73 nm; acid value: 55 mgKOH/g; solid content: 45%; corresponding to a content of the polymer particles BI1 of 12% in the ink) available from BASF AG were added thereto so as to prepare an ink having such a composition as shown in Table 2, followed by stirring the contents of the production container at 150 rpm.

Moreover, 1.0 part of an acetylene glycol-based surfactant "SURFYNOL 104" (tradename; 2,4,7,9-tetramethyl-5-decyne-4,7-diol (HLB: 3.0); active ingredient content: 100%) available from Nissin Chemical Co., Ltd., 0.5 part of a polyether-modified silicone-based surfactant "TEGO wet 240" (tradename; active ingredient content: 100%) available from Evonik Japan Co., Ltd., 0.10 part of an antiseptic compound A1 "Ploxel LV(S)" (tradename; 1,2-benzisothiazolin-3-one; active ingredient content: 20%) available from LONZA Japan K.K., and 19.2 parts of ion-exchanged water were added to the production container, followed by stirring the contents of the production container at room temperature for 30 minutes. Then, the resulting dispersion was subjected to filtration treatment through a stainless steel wire mesh screen (200 mesh), thereby obtaining an ink I-1. The results are shown in Table 2. Meanwhile, the total amount of the respective components shown in Table 2 was 100 parts.

Examples 1-2 to I-10 and Comparative Examples I-1 to I-5 (Preparation of Aqueous Gravure Inks 1-2 to I-10 and 1-31 to 1-35)

The same procedure as in Example I-1 was repeated except that the conditions used in Example I-1 were changed to those shown in Table 2, thereby obtaining aqueous gravure inks I-2 to I-10 and 1-31 to I-35.

Incidentally, the details of the respective notations shown in Table 2 are as follows.

(Antiseptic Compounds)

- A1: "Ploxel LV(S)" (tradename; 1,2-benzisothiazolin-3-one; active ingredient content: 20%) available from LONZA Japan K.K.
- A2: "ProClin950" (tradename; a mixture of 2-methyl-4-isothiazolin-3-one and 5-chloro-2-methyl-4-isothiazolin-3-one; active ingredient content: 9.5%) available from Sigma Aldrich Inc.
- A3: 2-n-Octyl-4-isothiazolin-3-one (active ingredient content: 100%) available from Tokyo Chemical Industry Co., Ltd.
- A4: "DENSIL DN" (tradename; butyl-benzisothiazolin-3-one; active ingredient content: 100%) available from LONZA Japan K.K.
- A5: "Zinc Omdine ZOE" (tradename; zinc pyrithione; active ingredient content: 55%) available from LONZA Japan K.K.
- A6: 2-Phenoxyethanol (active ingredient content: 100%) available from Tokyo Chemical Industry Co., Ltd.

The following printing test was conducted using the inks I-1 to I-10 obtained in Examples I-1 to I-10, respectively, and the inks I-31 to I-35 obtained in Comparative Examples I-1 to I-5, respectively, to evaluate rub fastness and storage stability thereof. The results are shown in Table 2.

<Printing Test>

Using the respective inks obtained in the aforementioned Examples and Comparative Examples, gravure printing was conducted on a corona discharge-treated surface of a PET film "FE-2001, #12" (tradename) available from Futamura Chemical Co., Ltd.

Upon the printing operation, 100%-dot solid image printing was conducted using an electronic engraved plate (gravure screen lines: 175 lines/inch; plate cell depth: 31 $\mu$m) attached to a bench-top gravure printing tester "K PRINTING PROOFER" (tradename) available from MATSUO SANGYO Co., Ltd., and the thus printed film was dried on a hot plate (60°C) for 5 minutes, thereby obtaining a printed material.

<Evaluation of Rub Fastness>

A solid image printed portion of the obtained printed material was reciprocatively rubbed with a cotton swab 10 times, and then a peeled area of the solid image printed portion rubbed was determined to evaluate rub fastness thereof according to the following ratings.

A: Peeled area of the solid image printed portion rubbed was not less than 0% and less than 5%.

B: Peeled area of the solid image printed portion rubbed was not less than 5% and less than 10%.
C: Peeled area of the solid image printed portion rubbed was not less than 10% and less than 20%.
D: Peeled area of the solid image printed portion rubbed was not less than 20% and less than 50%.
E: Peeled area of the solid image printed portion rubbed was not less than 50%.

Incidentally, when the evaluation rating was A, B or C, the ink could be used in practical applications without problems.

<Evaluation of Storage Stability>

The respective inks obtained in the aforementioned Examples and Comparative Examples were stored in a thermostatic chamber set to 40°C for one month to evaluate a rate of change in particle size of the ink from an initial average particle size thereof according to the following ratings.

$$\text{Rate of change in particle size (\%)} = [(\text{average particle size of ink after storage})/(\text{average particle size of ink before storage}) - 1] \times 100$$

A: Rate of change in particle size of the ink was not less than 0% and less than 5%.
B: Rate of change in particle size of the ink was not less than 5% and less than 10%.
C: Rate of change in particle size of the ink was not less than 10% and less than 20%.
D: Rate of change in particle size of the ink was not less than 20% and less than 50%.
E: Rate of change in particle size of the ink was not less than 50%.

Incidentally, when the evaluation rating was A, B or C, the ink could be used in practical applications without problems.

TABLE 2

| | | | Examples | | | | | | | | | | Comparative Examples | | | | |
|---|---|---|---|---|---|---|---|---|---|---|---|---|---|---|---|---|---|
| | | | I-1 | I-2 | I-3 | I-4 | I-5 | I-6 | I-7 | I-8 | I-9 | I-10 | I-1 | I-2 | I-3 | I-4 | I-5 |
| Kind of aqueous gravure ink | | | I-1 | I-2 | I-3 | I-4 | I-5 | I-6 | I-7 | I-8 | I-9 | I-10 | I-31 | I-32 | I-33 | I-34 | I-35 |
| Composition of ink | Pigment water dispersion liquid | Kind | I-1 | I-2 | I-2 | I-2 | I-2 | I-2 | I-2 | I-2 | I-2 | I-3 | I-4 | I-4 | I-5 | I-5 | I-6 |
| | | nm | 154 | 340 | 340 | 340 | 340 | 340 | 340 | 340 | 340 | 486 | 180 | 180 | 455 | 455 | 533 |
| | | part (s) | 52.5 | 52.5 | 52.5 | 52.5 | 52.5 | 52.5 | 52.5 | 52.5 | 52.5 | 52.5 | 52.5 | 52.5 | 52.5 | 52.5 | 52.5 |
| | Polymer emulsion | part (s) | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 |
| | Acetylene glycol-based surfactant | part (s) | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Silicone-based surfactant | part (s) | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Antiseptic agent | Kind | A1 | A1 | A1 | A1 | A2 | A3 | A4 | A5 | A6 | A1 | - | A1 | - | A1 | A1 |
| | | part (s) | 0.10 | 0.005 | 0.10 | 0.25 | 0.21 | 0.02 | 0.036 | 0.02 | 0.02 | 0.10 | - | 0.35 | - | 0.35 | 0.25 |
| | Ion-exchanged water | part (s) | 19.2 | 19.3 | 19.2 | 19.1 | 19.1 | 19.3 | 19.3 | 19.3 | 19.3 | 19.2 | 19.3 | 19.0 | 19.3 | 19.0 | 19.1 |
| Average particle size of ink (nm)[*1] | | | 154 | 372 | 340 | 324 | 346 | 364 | 352 | 359 | 371 | 486 | 197 | 180 | 455 | 472 | 535 |
| Polydispersity index of ink[*2] | | | 0.12 | 0.26 | 0.23 | 0.21 | 0.24 | 0.25 | 0.25 | 0.25 | 0.26 | 0.29 | 0.08 | 0.06 | 0.36 | 0.32 | 0.09 |
| Evaluation | Storage stability | | C | C | A | B | A | A | A | B | B | A | E | D | D | C | D |
| | Rub fastness | | A | B | A | A | A | B | B | B | B | C | C | C | E | D | D |

Note *1: Average particle size (nm) of whole particles in the ink.
*2: Polydispersity index of whole particles in the ink.

From the results shown in Table 2, it was confirmed that the aqueous gravure inks obtained in Examples I-1 to I-10 were excellent in storage stability as well as rub fastness of the resulting printed material, as compared to the aqueous inks obtained in Comparative Examples I-1 to 1-5. For this reason, it was confirmed that when using the aqueous gravure ink of the present invention, it was possible to obtain a high-quality gravure printed material.

Production Example II-1 (Production of Pigment Water Dispersion Liquid II-1 Containing Pigment-Containing Polymer Particles AII1)

Two hundred thirty six parts of ion-exchanged water were weighed and placed in a 2 L-capacity flask, and then 60 parts of a styrene-acrylic polymer "JONCRYL 690" (tradename; weight-average molecular weight: 16500; acid value: 240 mgKOH/g; Tg: 105°C) available from BASF AG and 36.5 parts of a 5N sodium hydroxide solution (sodium neutralization degree: 60 mol%) were added to the flask. The contents of the flask were stirred using an anchor blade at 200 rpm for 2 hours, thereby obtaining 332.5 parts of a polymer aqueous solution (solid content: 19.9%).

A 500 mL plastic container was charged with 554 parts of 0.8 mm$\phi$ zirconia beads "XTZ Ball" (tradename) available from Nikkato Corporation at a beads packing rate of 30% by volume, and 25.1 parts of the polymer aqueous solution, 200 parts of titanium dioxide "CR-90" (tradename; titanium oxide by chlorine method (rutile-type); average primary particle size: 250 nm; Al/Si-treated titanium oxide) as a pigment available from Ishihara Sangyo Kaisha, Ltd., and 194.9 parts of ion-exchanged water were added to the container, and then the contents of the container were subjected to dispersion treatment using a paint shaker "PS-1943" (tradename) available from Asada Iron Works Co., Ltd., for 2 hours. Thereafter, the obtained dispersion was allowed to pass through a 200-mesh wire screen to remove the zirconia beads therefrom, thereby obtaining 974 parts of a pigment water dispersion liquid II-1 having a solid content of 50% and containing pigment-containing polymer particles AII1 (pigment content: 48.8%; average particle size: 154 nm; polydispersity index: 0.11).

Production Examples II-2 to II-5 (Production of Pigment Water Dispersion Liquids II-2 to II-5 Containing Pigment-Containing Polymer Particles AII2 to AII5)

The same procedure as in Production Example II-1 was repeated except that the pigment dispersing conditions used in Production Example II-1 was changed to those shown in Table 3, thereby obtaining pigment water dispersion liquids II-2 to II-5 each having a solid content of 50% and containing pigment-containing polymer particles AII2 to AII5, respectively. The results are shown in Table 3.

TABLE 3

| | Pigment water dispersion liquid | Polymer | Dispersing conditions | | Results | |
|---|---|---|---|---|---|---|
| | | | Diameter of zirconia beads (mm) | Dispersing time | Average particle size (nm) | Polydispersity index |
| Production Example II-1 | Pigment water dispersion liquid II-1 | "JONCRYL 690" | 0.8 | 2 hr | 154 | 0.11 |
| Production Example II-2 | Pigment water dispersion liquid II-2 | "JONCRYL 690" | 0.8 | 1 hr | 340 | 0.23 |
| Production Example II-3 | Pigment water dispersion liquid II-3 | "JONCRYL 690" | 0.8 | 0.5 hr | 486 | 0.29 |
| Production Example II-4 | Pigment water dispersion liquid II-4 | "JONCRYL 690" | 0.3 | 1 hr | 180 | 0.06 |
| Production Example II-5 | Pigment water dispersion liquid II-5 | "JONCRYL 690" | 3.0 | 1 hr | 455 | 0.36 |

Example II-1 (Preparation of Aqueous Gravure Ink II-1)

A production container was charged with 52.5 parts of the pigment water dispersion liquid II-1 containing the pigment-containing polymer particles AII1 obtained in Production Example II-1 (corresponding to a pigment content of 25% and a content of the pigment particles A of 26% in the ink), and then 26.7 parts of a polymer emulsion P1 "JONCRYL PDX-7775" (tradename; styrene-acrylic polymer emulsion; average particle size: 73 nm; acid value: 55 mgKOH/g; polydispersity index: 0.11; solid content: 45%; corresponding to a content of the polymer particles BII1 of 12% in the ink) available from BASF AG were added thereto so as to prepare an ink having such a composition as shown in Table 4, followed by stirring the contents of the production container at 150 rpm.

Moreover, 1.0 part of an acetylene glycol-based surfactant "SURFYNOL 104" (tradename; 2,4,7,9-tetramethyl-5-decyne-4,7-diol (HLB: 3.0); active ingredient content: 100%) available from Nissin Chemical Co., Ltd., 0.5 part of a polyether-modified silicone-based surfactant "TEGO wet 240" (tradename; active ingredient content: 100%) available from Evonik Japan Co., Ltd., 0.10 part of an antiseptic compound A1 "Ploxel LV(S)" (tradename; 1,2-benzisothiazolin-3-one; active ingredient content: 20%) available from LONZA Japan K.K., and 19.2 parts of ion-exchanged water were added to the production container, followed by stirring the contents of the production container at room temperature for 30 minutes. Then, the resulting dispersion was subjected to filtration treatment through a stainless steel wire mesh screen (200 mesh), thereby obtaining an ink II-1. The results are shown in Table 4. Meanwhile, the total amount of the respective components shown in Table 4 was 100 parts.

Examples II-2 to II-12 and Comparative Examples II-1 to II-6 (Preparation of Aqueous Gravure Inks II-2 to II-12 and II-31 to II-36)

The same procedure as in Example II-1 was repeated except that the conditions used in Example II-1 were changed to those shown in Table 4, thereby obtaining aqueous gravure inks II-2 to II-12 and II-31 to II-36.

Incidentally, the details of the respective notations shown in Table 4 are as follows.

(Polymer Emulsions)

- P1: "JONCRYL PDX-7775" (tradename; acrylic polymer emulsion; average particle size: 73 nm; polydispersity index: 0.11) available from BASF AG
- P2: "ADEKA BONTIGHTER HUX-564" (tradename; polyurethane emulsion; average particle size: 180 nm; polydispersity index: 0.20) available from ADEKA Corporation
- P3: "PESRESIN A-645GH" (tradename; polyester emulsion; average particle size: 34 nm; polydispersity index: 0.28) available from TAKAMATSU Oil & Fat Co., Ltd.
- P4: "KE-1062" (tradename; styrene acrylic emulsion; average particle size: 93 nm; polydispersity index: 0.06) available from SEIKO PMC Corporation
- P5: "ADEKA BONTIGHTER HUX-232" (tradename; polyurethane emulsion; average particle size: 25 nm; polydispersity index: 0.33) available from ADEKA Corporation

Incidentally, the concentrations of the solid components (polymer particles B) in the polymer emulsions P1 to P5 all were 45%.

(Antiseptic Agents)

- A1: "Ploxel LV(S)" (tradename; 1,2-benzisothiazolin-3-one; active ingredient content: 20%) available from LONZA Japan K.K.
- A2: "ProClin950" (tradename; a mixture of 2-methyl-4-isothiazolin-3-one and 5-chloro-2-methyl-4-isothiazohn-3-one; active ingredient content: 9.5%) available from Sigma Aldrich Inc.
- A3: 2-n-Octyl-4-isothiazolin-3-one (active ingredient content: 100%) available from Tokyo Chemical Industry Co., Ltd.
- A4: "DENSIL DN" (tradename; butyl-benzisothiazolin-3-one; active ingredient content: 100%) available from LONZA Japan K.K.
- A5: "Zinc Omdine ZOE" (tradename; zinc pyrithione; active ingredient content: 55%) available from LONZA Japan K.K.
- A6: 2-Phenoxyethanol (active ingredient content: 100%) available from Tokyo Chemical Industry Co., Ltd.

The following printing test was conducted using the inks II-1 to II-12 obtained in Examples II-1 to II-12, respectively, and the inks II-31 to II-36 obtained in Comparative Examples II-1 to II-6, respectively, to evaluate adhesion properties and storage stability of the inks. The results are shown in Table 4.

<Printing Test>

The same printing test as in Examples I-1 to I-10 was conducted to thereby obtain printed materials.

<Evaluation of Adhesion Properties>

An adhesive tape "CELLOTAPE (registered trademark), CT-15S" (tradename; 15 mm in width) available from Nichiban Co., Ltd., was attached onto a solid image printed portion of the resulting printed material, and then peeled off from the solid image printed portion to measure a peeled area of the solid image printed portion and thereby evaluate adhesion properties of the ink according to the following ratings.

   A: Peeled area of the solid image printed portion was not less than 0% and less than 5%.
   B: Peeled area of the solid image printed portion was not less than 5% and less than 10%.
   C: Peeled area of the solid image printed portion was not less than 10% and less than 20%.
   D: Peeled area of the solid image printed portion was not less than 20% and less than 50%.
   E: Peeled area of the solid image printed portion was not less than 50%.

Incidentally, when the evaluation rating was A, B or C, the ink could be used in practical applications without problems.

<Evaluation of Storage Stability>

The same evaluation procedure as in Examples I-1 to I-10 was conducted to evaluate storage stability of the respective inks according to the aforementioned five ratings A to E.
Incidentally, when the evaluation rating was A, B or C, the ink could be used in practical applications without problems.

TABLE 4

| | | Examples | | | | | | | | | | | | Comparative Examples | | | | | |
|---|---|---|---|---|---|---|---|---|---|---|---|---|---|---|---|---|---|---|---|
| | | II-1 | II-2 | II-3 | II-4 | II-5 | II-6 | II-7 | II-8 | II-9 | II-10 | II-11 | II-12 | II-1 | II-2 | II-3 | II-4 | II-5 | II-6 |
| Kind of aqueous gravure ink | | II-1 | II-2 | II-3 | II-4 | II-5 | II-6 | II-7 | II-8 | II-9 | II-10 | II-11 | II-12 | II-31 | II-32 | II-33 | II-34 | II-35 | II-36 |
| Pigment particles | Kind | II-1 | II-2 | II-2 | II-2 | II-2 | II-2 | II-2 | II-2 | II-2 | II-2 | II-2 | II-3 | II-2 | II-4 | II-4 | II-5 | II-5 | II-2 |
| | Average particle size (nm) | 154 | 340 | 340 | 340 | 340 | 340 | 340 | 340 | 340 | 340 | 340 | 486 | 340 | 180 | 180 | 455 | 455 | 340 |
| | Polydispersity index | 0.11 | 0.23 | 0.23 | 0.23 | 0.23 | 0.23 | 0.23 | 0.23 | 0.23 | 0.23 | 0.23 | 0.29 | 0.23 | 0.06 | 0.06 | 0.36 | 0.36 | 0.23 |
| Polymer particles | Kind | P1 | P1 | P1 | P1 | P2 | P3 | P1 | P1 | P1 | P1 | P1 | P1 | P4 | P1 | P1 | P1 | P1 | P5 |
| | Average particle size (nm) | 73 | 73 | 73 | 73 | 180 | 34 | 73 | 73 | 73 | 73 | 73 | 73 | 93 | 73 | 73 | 73 | 73 | 25 |
| | Polydispersity index | 0.11 | 0.11 | 0.11 | 0.11 | 0.20 | 0.28 | 0.11 | 0.11 | 0.11 | 0.11 | 0.11 | 0.11 | 0.06 | 0.11 | 0.11 | 0.11 | 0.11 | 0.33 |
| Antiseptic agent | Kind | A1 | A1 | A1 | A1 | A1 | A1 | A2 | A3 | A4 | A5 | A6 | A1 | A1 | - | A1 | - | A1 | A1 |
| Composition of ink (part(s)) | Pigment water dispersion liquid | 52.5 | 52.5 | 52.5 | 52.5 | 52.5 | 52.5 | 52.5 | 52.5 | 52.5 | 52.5 | 52.5 | 52.5 | 52.5 | 52.5 | 52.5 | 52.5 | 52.5 | 52.5 |
| | Polymer emulsion | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 | 26.7 |
| | Acetylene glycol-based surfactant | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Silicone-based surfactant | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Antiseptic agent | 0.10 | 0.005 | 0.10 | 0.25 | 0.10 | 0.10 | 0.21 | 0.02 | 0.02 | 0.04 | 0.02 | 0.10 | 0.10 | - | 0.35 | - | 0.10 | 0.10 |
| | Ion-exchanged water | 19.2 | 19.3 | 19.2 | 19.1 | 19.2 | 19.2 | 19.1 | 19.3 | 19.3 | 19.3 | 19.3 | 19.2 | 19.2 | 19.3 | 19.0 | 19.3 | 19.2 | 19.2 |
| Evaluation results | Adhesion properties | A | B | A | A | B | A | B | B | B | B | B | C | B | C | C | E | D | D |
| | Storage stability | C | C | A | B | A | B | A | A | A | B | B | A | D | E | D | D | C | C |

From the results shown in Table 4, it was confirmed that the aqueous gravure inks obtained in Examples II-1 to II-12 were excellent in adhesion properties and storage stability, as compared to the aqueous gravure inks obtained in Comparative Examples II-1 to II-6. For this reason, it was confirmed that when using the aqueous gravure ink of the present invention, it was possible to obtain a high-quality gravure printed material.

Industrial Applicability

The aqueous gravure ink of the present invention is excellent in storage stability, and is capable of providing a high-quality printed material that is excellent in rub fastness and adhesion properties even when printed on a low-liquid absorbing printing medium.

**Claims**

1. An aqueous gravure ink comprising pigment particles A, polymer particles B and water, said aqueous gravure ink being capable of satisfying at least one of the following requirements 1 and 2:

  Requirement 1: an average particle size of whole particles in the aqueous gravure ink is not less than 150 nm and not more than 500 nm, and a polydispersity index in a particle size distribution of the whole particles is not less than 0.10 and not more than 0.30; and
  Requirement 2: an average particle size of the pigment particles A is not less than 140 nm and not more than 550 nm, and a polydispersity index in a particle size distribution of the pigment particles A is not less than 0.08 and not more than 0.32, and
  an average particle size of the polymer particles B is not less than 30 nm and not more than 220 nm, and a polydispersity index in a particle size distribution of the polymer particles B is not less than 0.08 and not more than 0.32.

2. The aqueous gravure ink according to claim 1, further comprising an antiseptic compound.

3. The aqueous gravure ink according to claim 2, wherein the antiseptic compound is at least one compound selected from the group consisting of an isothiazolin compound, an aromatic alcohol compound and a pyrithione metal complex.

4. The aqueous gravure ink according to claim 3, wherein the isothiazolin compound is at least one compound selected from the group consisting of 1,2-benzisothiazolin-3-one, butyl-benzisothiazolin-3-one, 5-chloro-2-methyl-4-isothiazolin-3-one, 2-methyl-4-isothiazolin-3-one and 2--n-octyl-4-isothiazolin-3-one.

5. The aqueous gravure ink according to claim 3 or 4, wherein the aromatic alcohol compound is phenoxyethanol, and the pyrithione metal complex is a pyrithione zinc complex.

6. The aqueous gravure ink according to any one of claims 2 to 5, wherein a content of the antiseptic compound in the aqueous gravure ink is not less than 0.002% by mass and not more than 1% by mass.

7. The aqueous gravure ink according to any one of claims 1 to 6, wherein a polymer constituting the polymer particles B is at least one resin selected from the group consisting of a vinyl-based resin, a polyester resin and a polyurethane resin.

8. The aqueous gravure ink according to any one of claims 1 to 7, wherein a content of the polymer particles B in the aqueous gravure ink is not less than 2% by mass and not more than 25% by mass.

9. The aqueous gravure ink according to any one of claims 1 to 8, wherein the pigment particles A are in the form of pigment-containing polymer particles A.

10. The aqueous gravure ink according to any one of claims 1 to 9, further comprising a nonionic surfactant.

11. The aqueous gravure ink according to claim 10, wherein the nonionic surfactant is at least one surfactant selected from the group consisting of an acetylene glycol-based surfactant and a silicone-based surfactant.

12. The aqueous gravure ink according to claim 10 or 11, wherein a content of the nonionic surfactant in the aqueous gravure ink is not less than 0.1% by mass and not more than 5% by mass.

13. A use of the aqueous gravure ink according to any one of claims 1 to 12 for gravure printing.

## INTERNATIONAL SEARCH REPORT

| International application No. |
|---|
| PCT/JP2019/047160 |

| A. CLASSIFICATION OF SUBJECT MATTER |
|---|
| Int.Cl. C09D11/037(2014.01)i |
| FI: C09D11/037 |
| |
| According to International Patent Classification (IPC) or to both national classification and IPC |

| B. FIELDS SEARCHED |
|---|
| Minimum documentation searched (classification system followed by classification symbols) |
| Int.Cl. C09D11/037 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

JSTPlus/JMEDPlus/JST7580(JDreamIII), keywords: グラビアインク, 多分散指数, and similar items

| C. DOCUMENTS CONSIDERED TO BE RELEVANT | | |
|---|---|---|
| Category* | Citation of document, with indication, where appropriate, of the relevant passages | Relevant to claim No. |
| X | JP 11-246807 A (TOYO INK MFG CO., LTD.) 14 September 1999, claims, paragraphs [0020]-[0054], examples 3, 5, 6, etc. | 1–13 |
| Y | JP 10-176132 A (NISSIN CHEMICAL INDUSTRY CO., LTD.) 30 June 1998, claims, paragraphs [0020]-[0036], examples 2, 4, 5, 8, 9, etc. | 1–13 |
| Y | JP 2006-45511 A (CANON INC.) 16 February 2006, paragraphs [0058], [0059], examples, etc. | 1–13 |
| Y | JP 2006-37082 A (CANON INC.) 09 February 2006, paragraphs [0071], [0072], examples, etc. | 1–13 |
| Y | JP 2006-8734 A (CANON INC.) 12 January 2006, paragraphs [0076], [0077], examples, etc. | 1–13 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10.01.2020 | 28.01.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

| | International application No. |
|---|---|
| | PCT/JP2019/047160 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2016-505648 A (BASF SE) 25 February 2016, paragraph [0160] | 2-6 |
| Y | JP 2006-523735 A (MERCK PATENT GMBH) 19 October 2006, paragraph [0051] | 2-6 |
| Y | WO 2017/047267 A1 (THINK LABORATORY CO., LTD.) 23 March 2017, paragraphs [0056]-[0060] | 10-12 |
| A | WO 2018/173901 A1 (TOYO INK SC HOLDINGS CO., LTD.) 27 September 2018, claims, examples, etc. | 1-13 |
| A | JP 2003-128955 A (KONICA CORPORATION) 08 May 2003, claims, examples, etc. | 1-13 |
| A | JP 2003-113341 A (KONICA CORPORATION) 18 April 2003, claims, examples, etc. | 1-13 |
| P, A | WO 2019/131900 A1 (KAO CORPORATION) 04 July 2019, claims, examples, etc. | 1-13 |

Form PCT/ISA/210 (second sheet) (January 2015)

# EP 3 901 224 A1

| INTERNATIONAL SEARCH REPORT | International application No. |
|---|---|
| Information on patent family members | PCT/JP2019/047160 |

| | | |
|---|---|---|
| JP 11-246807 A | 14 September 1999 | (Family: none) |
| JP 10-176132 A | 30 June 1998 | (Family: none) |
| JP 2006-45511 A | 16 February 2006 | US 2006/0142417 A1<br>paragraphs [0072], [0073],<br>examples, etc.<br>WO 2006/001513 A1 |
| JP 2006-37082 A | 09 February 2006 | US 2006/0130706 A1<br>paragraphs [0085], [0086],<br>examples, etc.<br>WO 2005/123846 A1 |
| JP 2006-8734 A | 12 January 2006 | (Family: none) |
| JP 2016-505648 A | 25 February 2016 | US 2015/0247043 A1<br>paragraph [0234]<br>WO 2014/076073 A1<br>EP 2920222 A1<br>CN 104822724 A |
| JP 2006-523735 A | 19 October 2006 | US 2006/0210500 A1<br>paragraph [0059]<br>WO 2004/092283 A2<br>EP 1633818 A2<br>CN 1777653 A |
| WO 2017/047267 A1 | 23 March 2017 | US 2018/0244932 A1<br>paragraphs [0156]-[0169]<br>EP 3342829 A1<br>CN 107922763 A |
| WO 2018/173901 A1 | 27 September 2018 | JP 2018-162430 A<br>claims, examples, etc.<br>TW 201840743 A |
| JP 2003-128955 A | 08 May 2003 | (Family: none) |
| JP 2003-113341 A | 18 April 2003 | US 2002/0112644 A1<br>claims, examples, etc.<br>EP 1215251 A1 |
| WO 2019/131900 A1 | 04 July 2019 | JP 2019-116071 A<br>claims, examples, etc. |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10204361 A
- JP 2017128701 A
- US 2809971 A

**Non-patent literature cited in the description**

- Polymer Structure (2): Scattering Experiments and Morphological Observation: Chapter 1, Light Scattering. Kyoritsu Publishing Co., Ltd,
- *J. Chem. Phys.,* 1979, vol. 70(B) (15), 3965